(19) Europäisches Patentamt
European Patent Office
Office européen des brevets

(11) Veröffentlichungsnummer: **0 429 944 A2**

(12) **EUROPÄISCHE PATENTANMELDUNG**

(21) Anmeldenummer: **90121702.6**

(22) Anmeldetag: **13.11.90**

(51) Int. Cl.5: **B23B 51/12**, B23B 31/00

(30) Priorität: **28.11.89 DE 3939291**

(43) Veröffentlichungstag der Anmeldung:
**05.06.91 Patentblatt 91/23**

(84) Benannte Vertragsstaaten:
**DE FR GB IT NL SE Patentblatt 00/1**

(71) Anmelder: **Deutsche Airbus GmbH**
**Kreetslag 10**
**W-2103 Hamburg 93(DE)**

(72) Erfinder: **Ende, Wolfgang**
**Wacholderweg 40**
**W-2153 Neu Wulmstorf(DE)**

(54) **Werkzeug-Aufnahmesystem.**

(57) Bei einem Werkzeugaufnahme-System zur Übertragung einer Drehbewegung von einer ein Innengewinde aufweisenden Werkzeugspindel über eine Werkzeugaufnahme auf ein Werkzeug mit einem Gewindeschaft, besteht die Erfindung darin, daß die Werkzeugspindel 1 mit der Werkzeugaufnahme 4 einstückig verbunden ist, wobei zur Zentrierung des Werkzeuges seitens der Werkzeugspindel 1 eine mit der Spindelachse fluchtende zylindrische Paßbohrung 6 und seitens des Werkzeuges ein zylindrischer Schaft vorgesehen ist, der von der Paßbohrung 6 mit einem vorbestimmten minimalen Spiel aufnehmbar ist, wobei die axiale Fixierung des Werkzeuges mittels einer auf der Spindelachse senkrecht stehenden Stirnfläche 7 erfolgt, an der das Werkzeug mit einer Schulter anliegt.

Hierbei ist insbesondere vorteilhaft, daß die geforderte Rundlaufgenauigkeit bei gleichzeitiger Reduzierung des fertigungstechnischen Aufwandes zur Herstellung des Systems erreicht wird.

FIG. 1

## WERKZEUG-AUFNAHMESYSTEM

Die Erfindung bezieht sich auf ein Werkzeug-Aufnahmesystem nach dem Oberbegriff des Anspruchs 1.

Die im Zusammenhang mit Werkzeugmaschinen bekannten Werkzeugaufnahme-Systeme, beispielsweise für Bohrautomaten mit einer Bohrvorschub-Einheit, sind so ausgebildet, daß in die betreffende Werkzeugspindel ein Adapter einsetzbar ist, der dann das Werkzeug aufnimmt. Dabei weisen sowohl die Aufnahme für den Adapter als auch die Aufnahme für das Werkzeug einen Paßkonus auf. Zum Anbringen von Nietbohrungen für Paßniete sind diese Werkzeugaufnahme-Systeme nicht geeignet, da die für derartige Paßbohrungen geforderten sehr kleinen Rundlaufabweichungen hiermit nicht erreicht werden.

Demgemäß liegt der Erfindung die Aufgabe zugrunde, ein gattungsgemäßes Werkzeug-Aufnahmesystem derart auszubilden, daß dieses gegenüber bisherigen Systemen wesentlich reduzierte Rundlaufabweichungen aufweist.

Diese Aufgabe wird bei einem gattungsgemäßen Werkzeug-Aufnahmesystem durch die kennzeichnenden Merkmale des Patentanspruchs 1 gelöst.

Dabei ist insbesondere von Vorteil, daß die geforderte Rundlaufgenauigkeit bei gleichzeitiger Reduzierung des fertigungstechnischen Aufwandes zur Herstellung des Systems erreicht wird.

Ein weiterer Vorteil der Erfindung besteht darin, daß infolge der höheren Rundlaufgenauigkeit höhere Standzeiten der Werkzeuge erreicht werden.

Weiterhin besteht ein Vorteil der Erfindung darin, daß damit kleinere Außendurchmesser der Werkzeugspindel im Bereich der Werkzeugaufnahme erzielbar sind, so daß sich bei Mehrspindelanordnungen kleinere Spindelabstände ergeben.

Vorteilhafte Weiterbildungen der Erfindung sind in den Unteransprüchen angegeben.

So besteht ein Vorteil der Ausgestaltungen nach den Ansprüchen 2 und 3 darin, daß das Werkzeug mit Hilfe von Spannwerkzeugen austauschbar ist.

Ein Vorteil der Ausgestaltungen nach den Ansprüchen 4 und 5 besteht darin, daß die Wirkung eines möglicherweise vorhandenen Gewindeversatzes aufgehoben wird.

Die Erfindung ist anhand der Zeichnung dargestellt und nachfolgend näher erläutert. Es zeigen

Fig. 1    eine Werkzeugspindel und
Fig. 2    ein Werkzeug

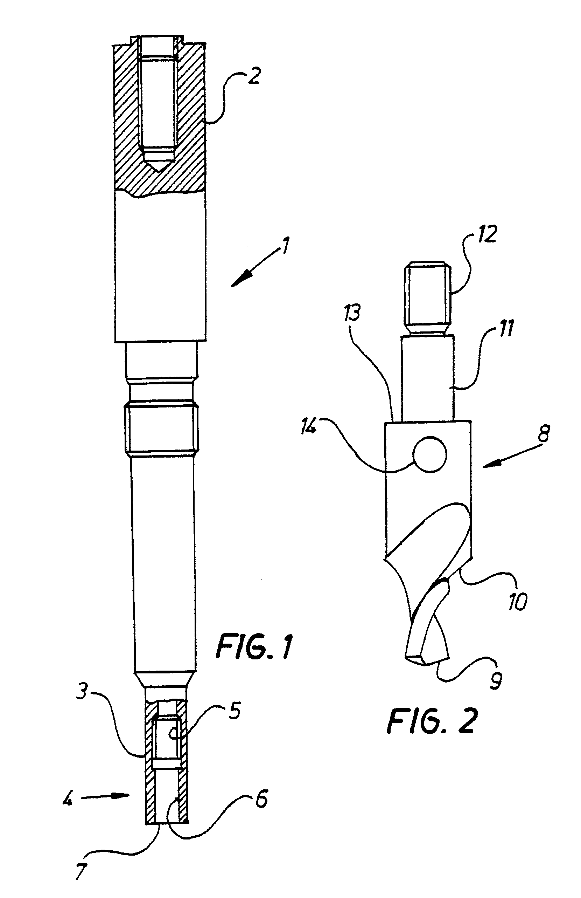

Fig. 1 zeigt eine Werkzeugspindel 1 mit einem maschinenseitigen Ende 2 und einem werkzeugseitigen Ende 3 mit einer Werkzeugaufnahme 4, bestehend aus einem Innengewinde 5 und einer mit der Spindelachse fluchtenden zylindrischen Paßbohrung 6. Damit ist die Werkzeugspindel 1 einstückig mit der Werkzeugaufnahme 4 verbunden. Den Abschluß des werkzeugseitigen Endes 3 bildet die Stirnfläche 7. Die Herstellung der Paßbohrung 6 ist selbst mit einer ISO-Toleranz H5 mit geringerem Aufwand herzustellen als ein bisheriger Paßkonus.

Fig. 2 zeigt vergrößert ein von der Spindel 1 aufnehmbares Werkzeug 8 in Form eines Bohrsenkers. Dieser besteht im wesentlichen aus einem Bohrer 9 und einem Senker 10, wobei das maschinenseitige Ende des Werkzeuges einen zylindrischen Schaft 11 von vorbestimmter Durchmesser- und Rundlaufgenauigkeit und ein Außengewinde 12 aufweist. Das Werkzeug 8 weist weiterhin eine Schulter 13 und eine Querbohrung 14 auf. Das Werkzeug 8 wird in die Spindel 1 eingesetzt, indem der Schaft 11 mit dem Gewinde 12 in die Bohrung 6 der Spindel eingeführt und dann festgeschraubt wird, bis die Schulter 13 an der Stirnfläche 7 anliegt. Im eingesetzten Zustand ist das Werkzeug 8 durch die Paßbohrung 6 und den Schaft 11 zentriert, wobei dieser von der Paßbohrung 6 mit einem vorbestimmten minimalen Spiel aufnehmbar ist. Zur Erreichung des geforderten Wertes der Rundlaufgenauigkeit ist darauf zu achten, daß die Summe der Ungenauigkeiten der einzelnen Elemente diesen Wert nicht übersteigt. Zum Anziehen der durch die Gewinde 5 und 12 gebildeten Schraubverbindung kann ein durch die Querbohrung 14 gesteckter Dorn verwendet werden. Dabei kann die Spindel 1 beispielsweise mittels eines Schraubenschlüssels festgehalten werden.

Eine andere Ausgestaltung der Erfindung besteht darin, daß das Werkzeug 8 anstelle der Querbohrung 14 Abflachungen zum Ansetzen eines Schraubenschlüssels aufweist.

Um den Einfluß eines möglichen Versatzes zwischen dem Schaft 11 und dem Gewinde 12 und/oder der Bohrung 6 und dem Innengewinde 6 auf sehr einfache Weise zu aufzuheben, besteht eine weitere Ausgestaltung der Erfindung darin, daß zwischen dem Innengewinde 5 und dem Außengewinde 12 eine Spielpassung vorgesehen ist.

Eine andere Lösung zur Aufhebung der Wirkung des besagten Versatzes besteht darin, daß die Gewinde 5 und 12 ein Rechteck-Profil aufweisen.

Die Erfindung ist nicht auf die dargestellten und beschriebenen Beispielausführungen beschränkt. Sie erstreckt sich vielmehr auf alle Ausgestaltungen, die im Rahmen der Ansprüche denkbar sind.

Hierzu 1 Blatt Zeichnungen

## Ansprüche

1. Werkzeugaufnahme-System zur Übertragung einer Drehbewegung von einer ein Innengewinde aufweisenden Werkzeugspindel über eine Werkzeugaufnahme auf ein Werkzeug mit einem Gewindeschaft, **dadurch gekennzeichnet,** daß die Werkzeugspindel (1) mit der Werkzeugaufnahme (4) einstückig verbunden ist, wobei zur Zentrierung des Werkzeuges (8) seitens der Werkzeugspindel (1) eine mit der Spindelachse fluchtende zylindrische Paßbohrung (6) und seitens des Werkzeuges (8) ein zylindrischer Schaft (11) vorgesehen ist, der von der Paßbohrung (6) mit einem vorbestimmten minimalen Spiel aufnehmbar ist, wobei die axiale Fixierung des Werkzeuges (8) mittels einer auf der Spindelachse senkrecht stehenden Stirnfläche (7) erfolgt, an der das Werkzeug (8) mit einer Schulter (13) anliegt.

2. System nach Anspruch 1, **dadurch gekennzeichnet,** daß das Werkzeug (8) eine Querbohrung aufweist.

3. System nach Anspruch 1, **dadurch gekennzeichnet,** daß das Werkzeug (8) Abflachungen zum Ansetzen eines Schraubenschlüssels aufweist.

4. System nach einem der Ansprüche 1 bis 3, **dadurch gekennzeichnet,** daß das Innengewinde (5) im Zusammenwirken mit dem Außengewinde (12) eine Spielpassung ergibt.

5. System nach einem der Ansprüche 1 bis 3, **dadurch gekennzeichnet,** daß das Innengewinde (5) und das Außengewinde (12) ein Rechteckprofil aufweisen.

EP 0 429 944 A2

FIG.1

FIG. 2

4